# EUROPEAN PATENT SPECIFICATION

(11) **EP 3 536 593 B1**
(45) Date of publication and mention of the grant of the patent: **04.08.2021**
(21) Application number: 19161216.7
(22) Date of filing: 07.03.2019
(51) Int. Cl.: B62K 21/12, B62K 21/18, B62K 19/28

(54) **HANDLE ASSEMBLY FOR STRADDLED VEHICLES AND STRADDLED VEHICLE**
LENKERANORDNUNG FÜR EIN MOTORRAD
ENSEMBLE GUIDON POUR MOTO

(30) Priority: 07.03.2018 JP 2018040627
(43) Date of publication of application: 11.09.2019
(73) Proprietor: Yamaha Hatsudoki Kabushiki Kaisha, Iwata-shi, Shizuoka 438-8501 (JP)
(72) Inventor: KAWAGUCHI, Tsutomu, Iwata-shi, Shizuoka 438-8501 (JP)
(74) Representative: Grünecker Patent- und Rechtsanwälte PartG mbB

(56) References cited:
- CN-A- 103 847 896
- CN-B- 101 746 462
- CN-U- 203 958 502
- JP-A- 2006 076 528
- JP-U- S5 890 894

## Description

The present invention relates to a handle assembly for use in a straddled vehicle, and a straddled vehicle.

One known type of handle assembly for straddled vehicles is those in which a handle pipe is attached to a steering shaft via a handle post. Japanese Laid-Open Patent Publication No. 2006-76528 (hereinafter "Patent Document 1") discloses a construction for this type of handle assembly, in accordance with the preamble of claim 1 and where a reinforcement pipe is provided for reinforcing the handle pipe.

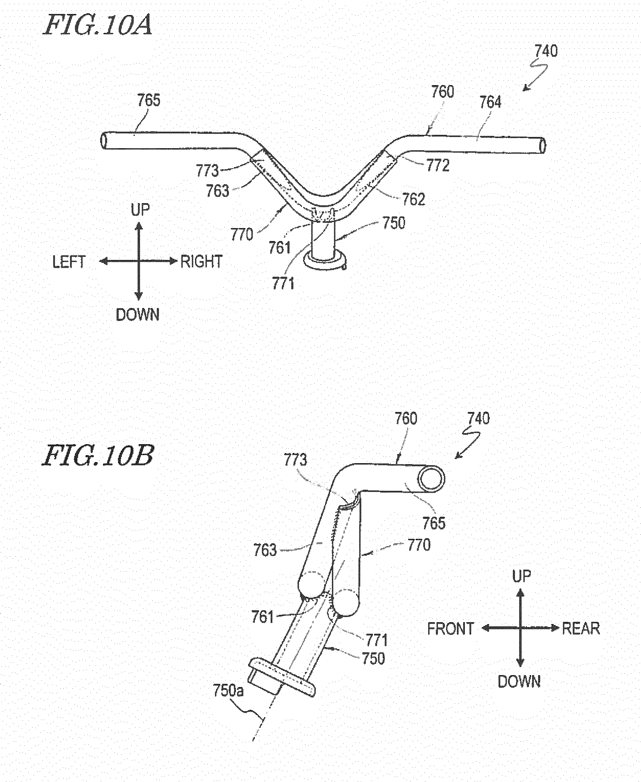

FIGS. **10A** and **10B** show a handle assembly **740** of the construction disclosed in Patent Document 1. FIG. **10A** is an illustration showing the handle assembly **740** as viewed from the rear; and FIG. **10B** is an illustration showing the handle assembly **740** as viewed from the left. As shown in FIGS. **10A** and **10B****,** the handle assembly **740** includes a handle post **750,** a handle pipe **760,** and a reinforcement pipe **770.**

The handle post **750** is fixed to an upper end portion of a steering shaft. At the front of an axis **750a** of the handle post **750,** the handle pipe **760** is welded to an upper portion of the handle post **750.** At the back of the axis **750a** of the handle post **750,** the reinforcement pipe **770** is welded to an upper portion of the handle post **750.**

The handle pipe **760** includes: a central portion **761** that is coupled to an upper portion of the handle post **750;** an upper-right stretch **762** extending rightward and upward from the central portion **761;** an upper-left stretch **763** extending leftward and upward from the central portion **761;** a right-grip support **764** extending rightward from the upper-right stretch **762** and having a grip member attached at a right end thereof; and a left-grip support **765** extending leftward from the upper-left stretch **763** and having a grip member attached at a left end thereof.

The reinforcement pipe **770** includes: a center pipe portion **771** coupled to an upper portion of the handle post **750;** a crushed right end **772** extending rightward and upward from the center pipe portion **771** and being crushed to have a U-shaped cross section; and a crushed left end **773** extending leftward and upward from the center pipe portion **771** and being crushed to have a U-shaped cross section.

The crushed right end **772** is welded so as to follow along the rear face of the upper-right stretch **762** of the handle pipe **760.** The crushed left end **773** is welded so as to follow along the rear face of the upper-left stretch **763** of the handle pipe **760.**

In the construction of Patent Document 1, for enhanced formability, the center pipe portion **771** of the reinforcement pipe **770** remains pipe-like. Moreover, the center pipe portion **771** of the reinforcement pipe **770** is coupled to an upper portion of the handle post **750** so as to be significantly away, rearward, from the central portion **761** of the handle pipe **760.** This causes the handle assembly **740** to be bulkier along the front-rear direction.

The present invention has been made in view of the above problems, and an objective thereof is to provide a handle assembly for straddled vehicles which can be made compact while maintaining sufficient strength. According to the present invention said object is solved by a handle assembly for a straddled vehicle having the features of independent claim 1. Preferred embodiements are laid down in the dependent claims.

A handle assembly according to an embodiment is a handle assembly for a straddled vehicle, the handle assembly comprising: a handle post; a handle pipe coupled to one end of the handle post, the handle pipe extending along a right-left direction which is orthogonal to an axial direction of the handle post; and a reinforcement member coupled to the handle post and the handle pipe, wherein, the handle pipe includes a central portion coupled to the handle post, an upper-right stretch extending upward and rightward from the central portion, an upper-left stretch extending upward and leftward from the central portion, a right-grip support extending rightward from the upper-right stretch, a grip member being attached at a right end thereof, and a left-grip support extending leftward from the upper-left stretch, a grip member being attached at a left end thereof; the reinforcement member is overlaid on the handle post and the handle pipe in a front-rear direction which is orthogonal to the axial direction and the right-left direction; in a cross section orthogonal to a pipe center line of the handle pipe, at least a part of the reinforcement member extends along a peripheral direction of the handle pipe; the reinforcement member includes a right pipe-overlapping portion that overlaps the upper-right stretch of the handle pipe, a left pipe-overlapping portion that overlaps the upper-left stretch of the handle pipe, and a post-overlapping portion that is connected to the right pipe-overlapping portion and the left pipe-overlapping portion and overlaps an area from the central portion of the handle pipe to the handle post; at least one of the right pipe-overlapping portion and the left pipe-overlapping portion of the reinforcement member includes a protrusion that protrudes, in a cross section orthogonal to the pipe center line, from an outer peripheral surface of the handle pipe in a radial direction; and the protrusion or protrusions extend in a direction that the pipe center line of the handle pipe extends, and is located neither at an edge of a right end of the right pipe-overlapping portion nor at an edge of a left end of the left pipe-overlapping portion.

In one embodiment, the edge of the right end of the right pipe-overlapping portion and the edge of the left end of the left pipe-overlapping portion make an acute angle with respect to the direction that the pipe center line extends.

In one embodiment, the edge of the right end of the right pipe-overlapping portion and the edge of the left end of the left pipe-overlapping portion obliquely intersect the pipe center line, as viewed in the front-rear direction.

In one embodiment, the protrusion or protrusions of the reinforcement member have a protruding height which is equal to or greater than a thickness of the reinforcement member.

According to the invention, the upper-right stretch and the upper-left stretch of the handle pipe each include: an inner curved portion which is continuous with the central portion and is curved; a linear portion which linearly extends from the inner curved portion; and an outer curved portion which extends from the linear portion and is curved.

According to the invention, an outer end of the protrusion or protrusions of the reinforcement member regarding the right-left direction overlaps the linear portion.

According to the invention, the reinforcement member overlaps neither the outer curved portion of the upper-right stretch nor the outer curved portion of the upper-left stretch.

In one embodiment, a periphery of the reinforcement member includes a welded portion that is welded to the handle post or the handle pipe and a non-welded portion that is welded to neither the handle post nor the handle pipe.

In one embodiment, the welded portion is located in at least a part of each of the edge of the right end of the right pipe-overlapping portion and the edge of the left end of the left pipe-overlapping portion.

A straddled vehicle according to an embodiment comprises a handle assembly of any of the above constructions.

A handle assembly according to an embodiment has a reinforcement member which includes a post-overlapping portion that overlaps an area from the central portion of the handle pipe to the handle post, thus allowing the reinforcement member to couple to the handle post at a position not significantly away from the central portion of the handle pipe along the front-rear direction. As a result, compactness can be achieved while maintaining strength. Moreover, in a handle assembly according to an embodiment, a right pipe-overlapping portion and/or a left pipe-overlapping portion of the reinforcement member include a protrusion that protrudes, in a cross section that is orthogonal to the pipe center line, from the outer peripheral surface of the handle pipe in a radial direction. This allows the geometrical moment of inertia of the reinforcement member to be increased for an improved rigidity. Moreover, since the protrusion(s) of the reinforcement member extends in the direction that the pipe center line extends, rigidity of the reinforcement member can be improved across a wide span (i.e., in an overall manner). Therefore, the handle pipe can be reduced in thickness. Furthermore, the protrusion(s) of the reinforcement member is not located at an edge of the right end of the right pipe-overlapping portion or an edge of the left end of the left pipe-overlapping portion. In other words, the outer end of each protrusion is in a position deviated from the edge of the right end of the right pipe-overlapping portion or the edge of the left end of the left pipe-overlapping portion. The right end of the right pipe-overlapping portion and the left end of the left pipe-overlapping portion (which also define the right end and left end of the entire reinforcement member) are places where drastic changes in rigidity of the handle assembly occur, because of presence or absence of the reinforcement member, where stress is likely to concentrate. In contrast, if each protrusion is located at the edge of an end (the right end or the left end) of the reinforcement member, the welded portion at the end of the reinforcement member will become a place where stress concentrates. Therefore, if the outer end of each protrusion is at the edge of an end of the reinforcement member, changes in rigidity of the handle assembly will be become wider; that is, two factors of stress concentration exist for the same cross section, thus causing significant stress. On the other hand, according to an embodiment, the outer end of each protrusion is in a position deviated from the edge of the right end of the right pipe-overlapping portion or the edge of the left end of the left pipe-overlapping portion, whereby the aforementioned stress concentration can be avoided.

When the edge of the right end of the right pipe-overlapping portion and the edge of the left end of the left pipe-overlapping portion make an acute angle with respect to the direction that the pipe center line extends, changes in rigidity of the handle assembly at the right end and the left end of the reinforcement member are smooth, as compared to the case where they make a right angle. As a result, stress concentration can be alleviated.

When the edge of the right end of the right pipe-overlapping portion and the edge of the left end of the left pipe-overlapping portion obliquely intersect the pipe center line as viewed in the front-rear direction, changes in rigidity of the handle assembly at the right end and the left end of the reinforcement member are smooth, as compared to the case where they are orthogonal. As a result, stress concentration can be alleviated.

From the standpoint of increasing the geometrical moment of inertia to sufficiently increase rigidity of the reinforcement member, the protruding height of each protrusion is equal to or greater than the thickness of the reinforcement member.

The upper-right stretch and the upper-left stretch of the handle pipe each include, typically: an inner curved portion which is continuous with the central portion of the handle pipe and is curved; a linear portion which linearly extends from the inner curved portion; and an outer curved portion which extends from the linear portion and is curved.

From the standpoint of improving rigidity of the reinforcement member across a wide span, each protrusion preferably extends somewhat long from an end (that lies closer to the post-overlapping portion) of the right pipe-overlapping portion or the left pipe-overlapping portion, along the direction that the pipe center line extends; specifically, it is preferable that the outer end of each protrusion regarding the right-left direction overlaps the linear portion of the upper-right stretch of the handle pipe or the linear portion of the upper-left stretch.

Moreover, the reinforcement member preferably does not overlap the outer curved portions of the upper-right stretch and the upper-left stretch of the handle pipe. The reason is that, if the right end or the left end of the reinforcement member is located on the outer curved portions, substantial stress may act on the outer curved portions, which is not preferable.

Preferably, the periphery of the reinforcement member includes not only a welded portion(s) welded to the handle post or the handle pipe, but also a non-welded portion(s) welded to neither the handle post nor the handle pipe. In the case where the periphery of the reinforcement member does not include any non-welded portions, i.e., the entire periphery of the reinforcement member is a welded portion, thermal effects (strain or change in hardness) associated with the welding heat applied to the reinforcement member, or the handle pipe may be a problem. By allowing a non-welded portion to be included in the periphery while maintaining sufficient coupling strength of the reinforcement member, thermal effects due to excess welding heat can be reduced.

Regarding the periphery of the reinforcement member, in each of its region corresponding to the right end of the right pipe-overlapping portion and its region corresponding to the left end of the left pipe-overlapping portion, both the upper edge and the lower edge may be welded; only the upper edge may be welded; or only the lower edge may be welded. In other words, a welded portion may be located in at least a part of each of the edge of the right end of the right pipe-overlapping portion and the edge of the left end of the left pipe-overlapping portion.

A handle assembly according to an embodiment is suitably used for straddled vehicles.

According to an embodiment, there is provided a handle assembly for straddled vehicles which can be made compact while maintaining sufficient strength.

### BRIEF DESCRIPTION OF THE DRAWINGS

FIG. 1 is a side view schematically a straddled vehicle (scooter-type vehicle) 1 according to an embodiment.
FIGS. **2A** and **2B** are illustrations showing a handle assembly **40** of the scooter-type vehicle 1 as viewed from the rear and front, respectively.
FIGS. **3A** and **3B** are illustrations showing the handle assembly **40** as viewed from the left and right, respectively.
FIGS. **4A** and **4B** are illustrations showing the handle assembly **40** as viewed from above and below, respectively.
FIGS. **5A, 5B** and **5C** are illustrations showing a handle post **50** as viewed from the left, rear, and right, respectively.
FIG. **6** is an illustration showing a handle pipe **60** as viewed from the rear.
FIGS. **7A, 7B** and **7C** are illustrations showing a reinforcement member **70** as viewed from the rear, left, and right, respectively.
FIGS. **8A** and **8B** are illustrations each showing a cross-sectional structure of the handle assembly **40** that is orthogonal to a pipe center line **60a,** respectively showing cross sections taken along line **8A-8A'** and line **8B-8B'** in FIG. **4A****.**
FIGS. **9A** and **9B** are illustrations showing another example shape for a right end **72a** and a left end **73a** of the reinforcement member **70.**
FIGS. **10A** and **10B** are illustrations showing a handle assembly **740** having a construction as disclosed in Patent Document 1 as viewed from the rear and left, respectively.
FIG. **11A** is an illustration showing a handle assembly **840** of Comparative Example 1 as viewed from the rear, whereas FIGS. **11B** and **11C** are cross-sectional views respectively taken along line **11B-11B'** and line **11C-11C'** in FIG. **11A****.**
FIG. **12** is an illustration showing a handle assembly **940** of Comparative Example 2 as viewed from the rear.

### DETAILED DESCRIPTION

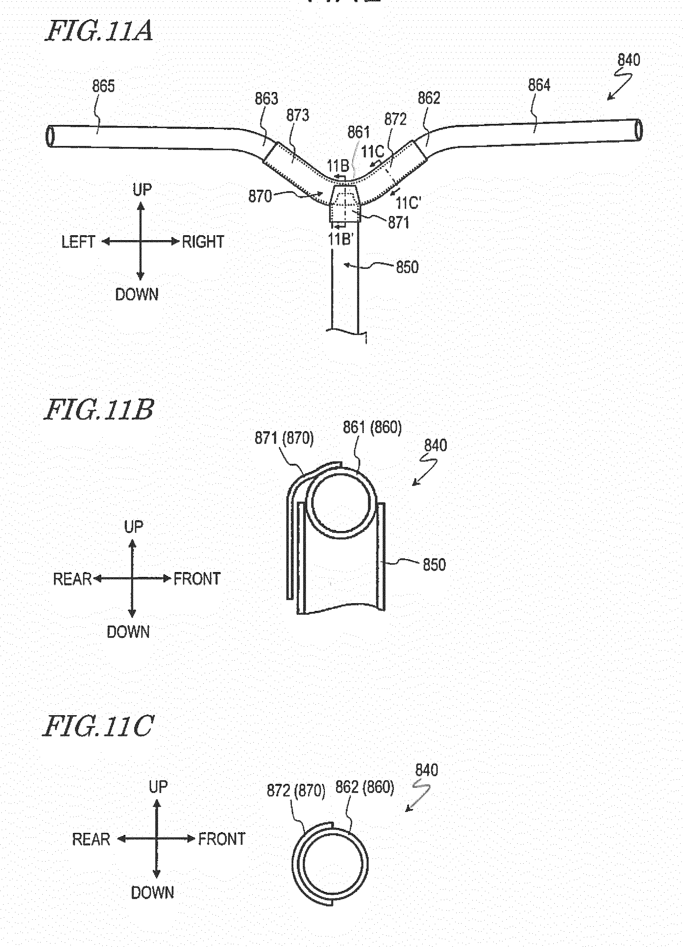

In order to realize a compact handle assembly for straddled vehicles, the inventor first considered a handle assembly **840** of the construction shown in FIGS. **11A, 11B** and **11C** (hereinafter referred to as "the handle assembly of Comparative Example 1"). FIG. **11A** is an illustration showing the handle assembly **840** as viewed from the rear. FIGS. **11B** and **11C** are cross-sectional views respectively taken along line **11B-11B'** and line **11C-11C'** in FIG. **11A****.**

The handle assembly **840** shown in FIGS. **11A, 11B** and **11C** includes a handle post **850,** a handle pipe **860,** and a reinforcement member **870,**

The handle pipe **860** includes: a central portion **861** that is coupled to an upper portion of the handle post **850;** an upper-right stretch **862** extending upward and rightward from the central portion **861;** an upper-left stretch **863** extending upward and leftward from the central portion **861;** a right-grip support **864** extending rightward from the upper-right stretch **862** and having a grip member attached at a right end thereof; and a left-grip support **865** extending leftward from the upper-left stretch **863** and having a grip member attached at a left end thereof.

The reinforcement member **870** includes a right pipe-overlapping portion **872** that overlaps the upper-right stretch **862** of the handle pipe **860;** a left pipe-overlapping portion **873** that overlaps the upper-left stretch **863** of the handle pipe **860;** and a post-overlapping portion **871** that is connected to the right pipe-overlapping portion **872** and the left pipe-overlapping portion **873,** the post-overlapping portion **871** overlapping an area from the central portion **861** of the handle pipe **860** to above the handle post **850.** The reinforcement member **870** has a U-shaped cross section substantially across its entirety, and is coupled to the handle post **850** without being significantly away from the handle pipe **860** along the front-rear direction.

Thus, it is believed that the handle assembly **840** of Comparative Example **1** can be made compact while maintaining strength around the portion where the handle post **850** and the handle pipe **860** are coupled (i.e., around the central portion **861** of the handle pipe **860).**

Beginning at the aforementioned construction of the handle assembly **840** of Comparative Example **1,** the inventor have conducted various studies, including those directed to enhancing the rigidity of the reinforcement member **870,** thereby arriving at the present invention. Hereinafter, with reference to the drawings, an embodiment will be described.

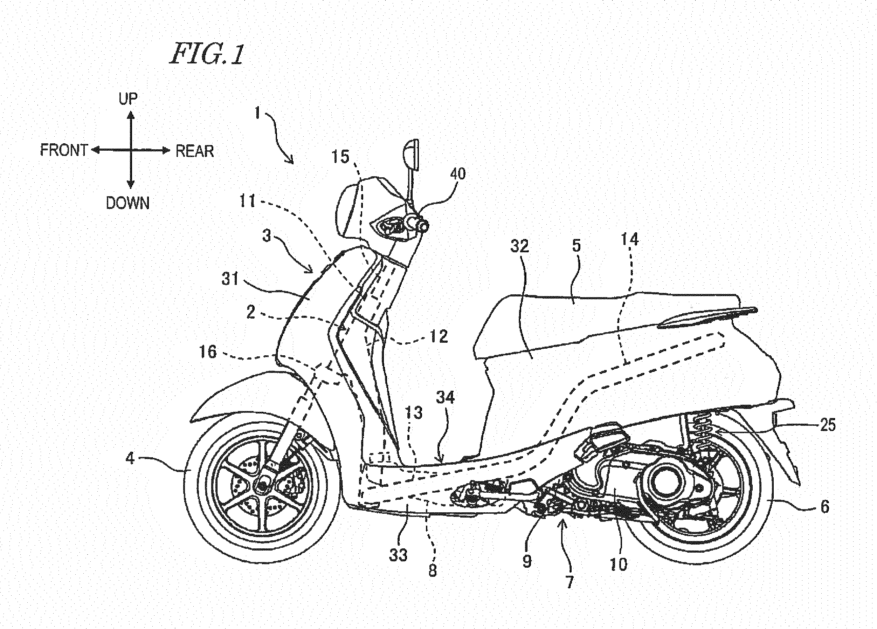

FIG. **1** shows a straddled vehicle **1** according to an embodiment. FIG. **1** is a side view schematically showing the straddled vehicle **1.** The straddled vehicle **1** shown in FIG. **1** is a scooter-type vehicle.

As shown in FIG. **1****,** the scooter-type vehicle **1** includes a body frame **2,** a body cover **3,** a front wheel **4,** a seat **5,** a rear wheel **6,** a power unit **7,** a fuel tank **8,** and a handle assembly **40.** In the present specification, the front-rear direction, the up-down direction, and the right-left direction of the scooter-type vehicle **1** respectively mean the front-rear, right-left, and up-down directions as viewed from a rider who sits on the seat **5** of the scooter-type vehicle **1.**

The body frame **2** includes a head pipe **11,** a down frame **12,** a lower frame **13,** and a seat frame **14.**

The steering shaft **15** is inserted in the head pipe **11** so as to be capable of rotating right and left. A lower portion of the steering shaft **15** is connected to front forks **16.** The front forks **16** rotatably support the front wheel **4.** An upper portion of the steering shaft **15** is connected to the handle assembly **40.**

The down frame **12** extends downward from the head pipe **11.** The lower frame **13** is connected to a lower portion of the down frame **12.** The lower frame **13** extends rearward from the down frame **12.** The seat frame **14** is connected to the lower frame **13.** The seat frame **14** extends rearward and upward from a rear portion of the lower frame **13.**

The body cover **3** includes a front cover **31,** a rear cover **32,** and a lower cover **33.** The front cover **31** covers the neighborhood of the head pipe **11** and the down frame **12.** The rear cover **32** covers the neighborhood of the seat frame **14.**

The seat **5** is disposed above the rear cover **32.** The seat **5** is disposed rearward of the head pipe **11.** The seat **5** is supported by the body frame **2.** More specifically, the seat **5** is supported by the seat frame **14** via a stay not shown.

The lower cover **33** is disposed between the front cover **31** and the rear cover **32.** The lower cover **33** covers the neighborhood of the lower frame **13.** An upper face of the lower cover **33** includes a flat footboard **34.** The flat footboard **34** is disposed downward and frontward of the seat **5.** The flat footboard **34** is disposed above the lower frame **13.** The flat footboard **34** is provided for the rider to set his or her feet on. The flat footboard **34** has a flat shape.

The power unit **7** is disposed below the seat **5.** The power unit **7** includes an engine **9** and a transmission **10.** The power unit **7** rotatably supports the rear wheel **6.** The rear wheel **6** is supported by the body frame **2** via a rear suspension **25.** The power unit **7** is swingingly supported by the body frame **2.**

The fuel tank **8** is disposed in the lower cover **33.** The fuel tank **8** is disposed below the flat footboard **34.**

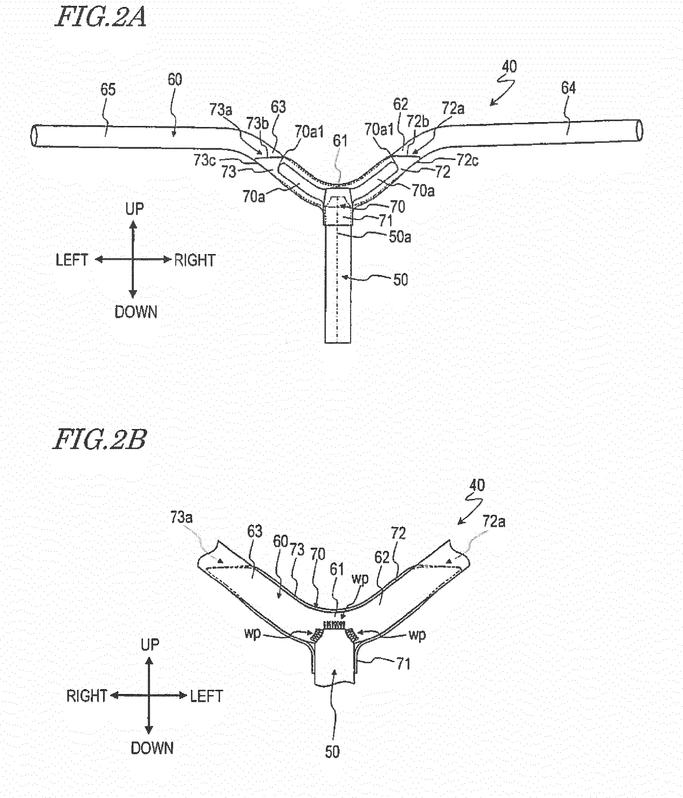

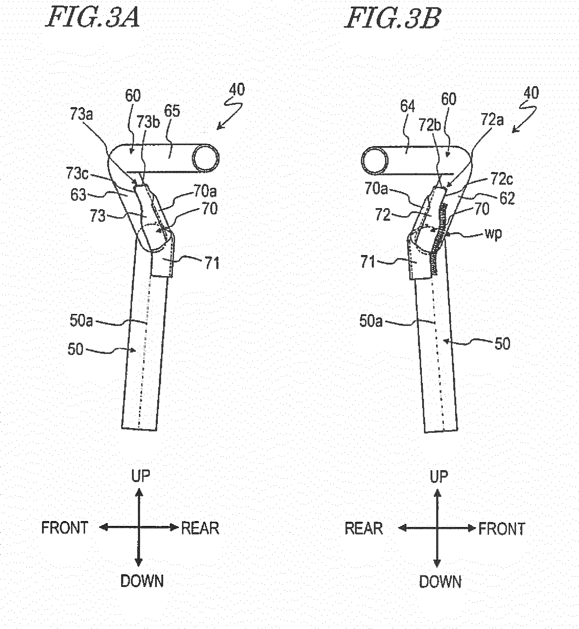

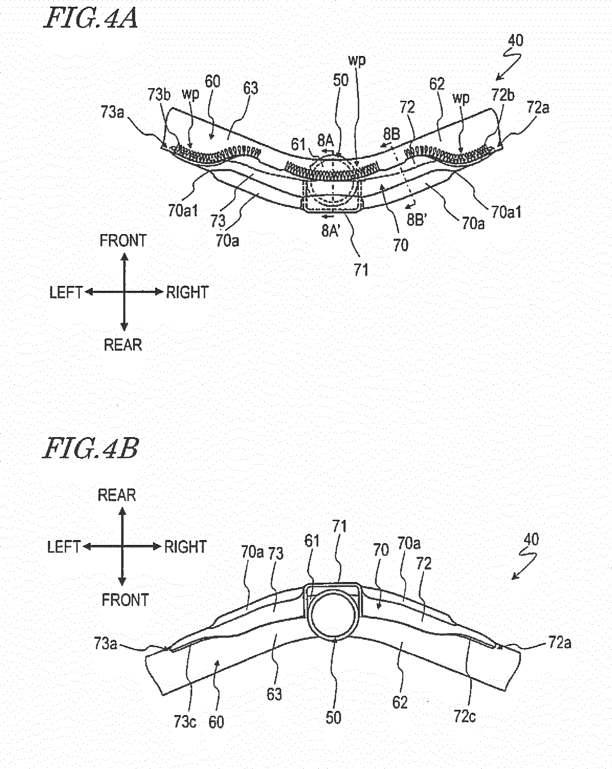

FIGS. **2A** and **2B****,** FIGS. **3A** and **3B****,** and FIGS. **4A** and **4B** show the handle assembly **40** of the scooter-type vehicle **1.** FIGS. **2A** and **2B** are illustrations showing the handle assembly **40** as viewed from the rear and front, respectively. FIGS. **3A** and **3B** are illustrations showing the handle assembly **40** as viewed from the left and right, respectively. FIGS. **4A** and **4B** are illustrations showing the handle assembly **40** as viewed from above and below, respectively.

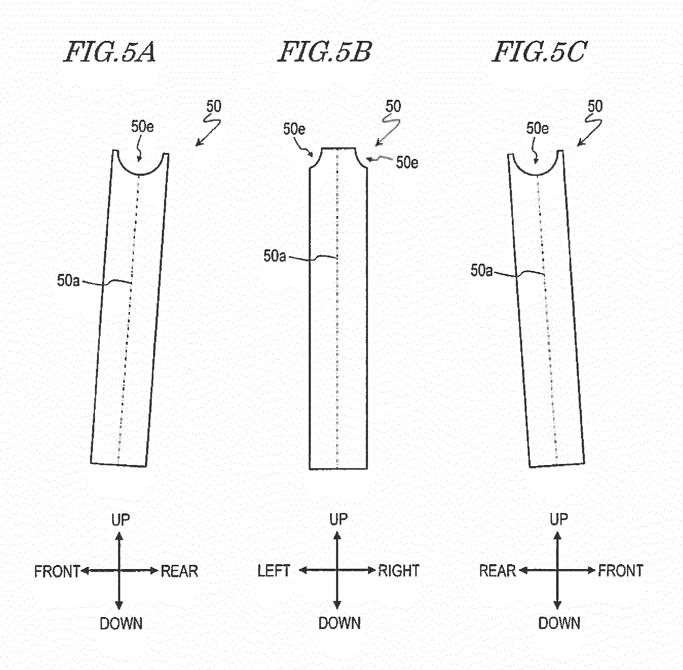

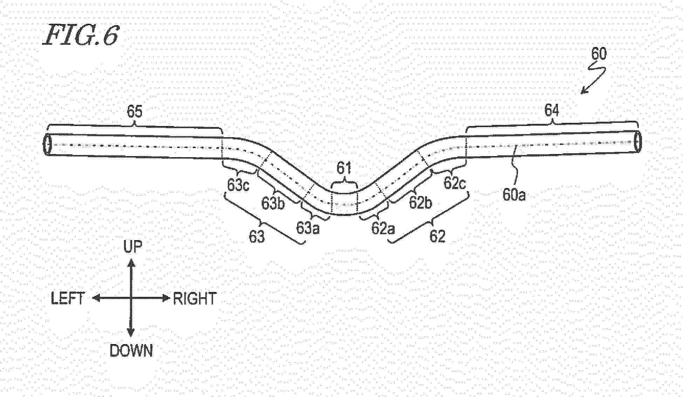

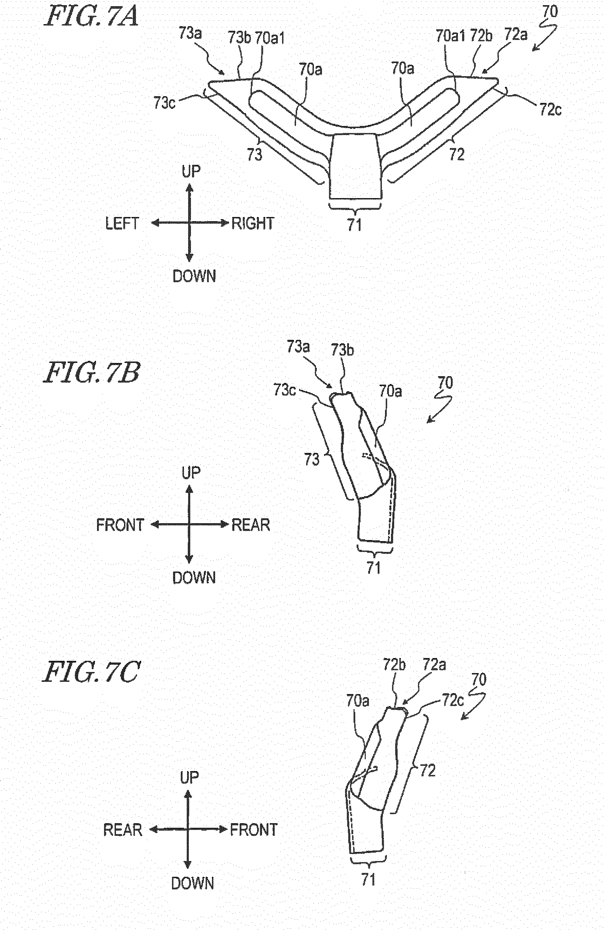

As shown in FIGS. **2A** and **2B****,** FIGS. **3A** and **3B****,** and FIGS. **4A** and **4B****,** the handle assembly **40** includes a handle post **50,** a handle pipe **60,** and a reinforcement member **70.** Hereinafter, with reference also to FIGS. **5A, 5B** and **5C****,** FIG. **6****,** and FIGS. **7A, 7B** and **7C****,** a more specific construction of the handle assembly **40** will be described. FIGS. **5A, 5B** and **5C** are illustrations showing the handle post **50** as viewed from the left, rear, and right, respectively. FIG. **6** is an illustration showing the handle pipe **60** as viewed from the rear. FIGS. **7A, 7B** and **7C** are illustrations showing the reinforcement member **70** as viewed from the rear, left, and right, respectively.

As shown in FIGS. **5A, 5B** and **5C****,** the handle post 50 is a pipe-like (substantially cylindrical) member. As shown in FIGS. **3A** and **3B****,** an axis **50a** of the handle post **50** is slightly inclined with respect to the up-down direction of the scooter-type vehicle 1. In other words, the handle post **50** extends generally along the up-down direction. The handle post **50** is made of a metal material (e.g., steel).

The handle post **50** is fixed to an upper portion of the steering shaft **15.** In the example shown, the upper portion of the steering shaft **15** is inserted through the handle post **50,** and the handle post **50** is fastened with a clamp member or the like, whereby it becomes fixed to the steering shaft **15.**

As shown in FIG. **6****,** the handle pipe **60** is a pipe-like (substantially cylindrical) member. Hereinafter, a center line **60a** of the handle pipe **60** may be referred to as a "pipe center line". As shown in FIGS. **2A** and **2B****,** the handle pipe **60** is coupled (e.g. welded herein) to one end (specifically, the upper end) of the handle post **50.** FIGS. **2B****,** **3B** and **4A** show examples of welded positions wp. At an upper end of the handle post **50,** an arc-shaped recess **50e** for positioning the handle pipe **60** is formed. As a whole, the handle pipe **60** extends along the right-left direction (i.e., a direction which is orthogonal to the axial direction of the handle post **50).** The handle pipe **60** is made of a metal material (e.g., steel).

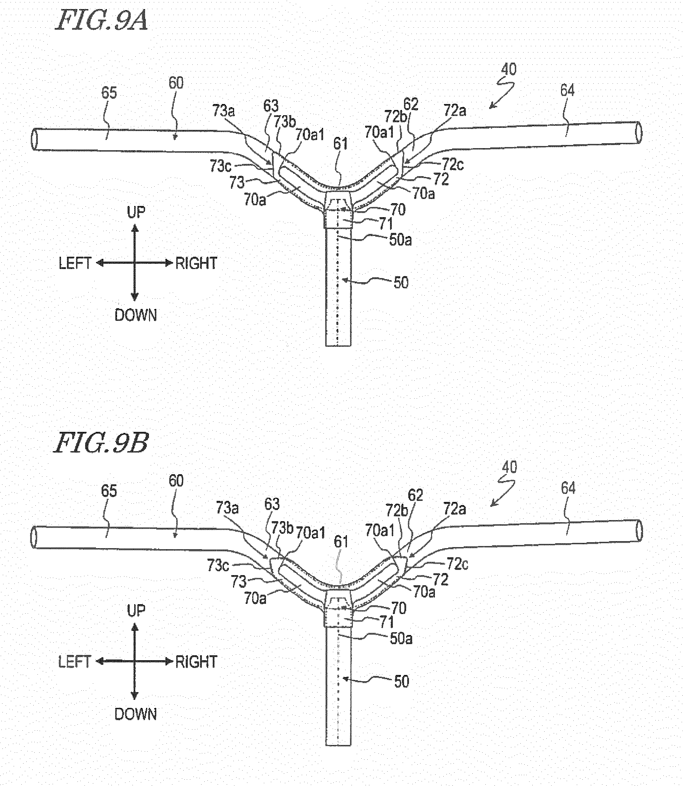

As shown in FIG. **2A** and so on, the reinforcement member **70** is coupled (e.g. welded herein) to the handle post **50** and the handle pipe **60.** The reinforcement member **70** is made of a metal material (e.g., steel). The reinforcement member **70** is a member obtained by shaping a metal plate, for example, and does not include any pipe-like portion, unlike the reinforcement pipe **770** shown in FIGS. **9A** and **9B****.**

As shown in FIG. **6****,** the handle pipe **60** includes a central portion **61,** an upper-right stretch **62,** an upper-left stretch **63,** a right-grip support **64,** and a left-grip support **65.**

The central portion **61** is coupled (e.g. welded herein) to the handle post **50.**

The upper-right stretch **62** extends upward and rightward from the central portion 61. The upper-right stretch **62** includes: an inner curved portion **62a** which is continuous with the central portion **61** and is curved; a linear portion **62b** which linearly extends from the inner curved portion **62a;** and an outer curved portion **62c** which extends from the linear portion **62b** and is curved.

The upper-left stretch **63** extends upward and leftward from the central portion **61.** The upper-left stretch **63** includes: an inner curved portion **63a** which is continuous with the central portion **61** and is curved; a linear portion **63b** which linearly extends from the inner curved portion **63a;** and an outer curved portion **63c** which extends from the linear portion **63b** and is curved.

The right-grip support **64** extends rightward from the upper-right stretch **62.** At a right end of the right-grip support **64,** a grip member not shown is attached.

The left-grip support **65** extends leftward from the upper-left stretch **63.** At a left end of the left-grip support **65,** a grip member not shown is attached.

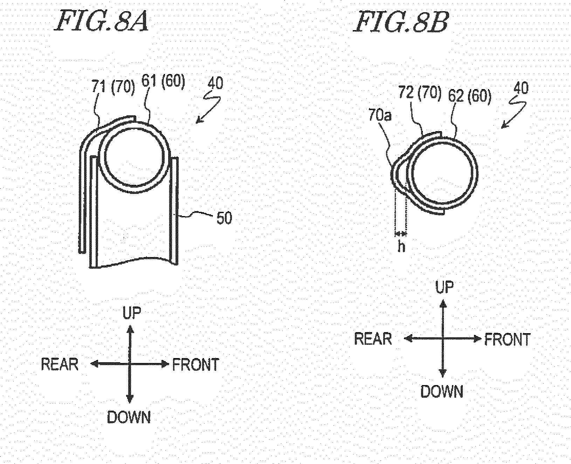

As shown in FIG. **2A** and so on, the reinforcement member **70** is overlaid on the handle post **50** and the handle pipe **60** in the front-rear direction, which is orthogonal to the right-left direction and the axial direction of the handle post **50.** FIGS. **8A** and **8B** show a cross-sectional structure of the handle assembly **40** that is orthogonal to the pipe center line **60a.** FIGS. **8A** and **8B** respectively show cross sections taken along line **8A-8A'** and line **8B-8B'** in FIG. **4A****.** As shown in FIGS. **8A** and **8B****,** in a cross section that is orthogonal to the pipe center line **60a,** at least a part of the reinforcement member **70** extends along the peripheral direction of the handle pipe **60** (i.e., covers the handle pipe **60** along its outer peripheral surface).

As shown in FIGS. **7A, 7B** and **7C****,** the reinforcement member **70** includes a post-overlapping portion **71,** a right pipe-overlapping portion **72,** and a left pipe-overlapping portion **73.**

As shown in FIG. **2A** and so on, the right pipe-overlapping portion **72** overlaps the upper-right stretch **62** of the handle pipe **60,** whereas the left pipe-overlapping portion **73** overlaps the upper-left stretch **63** of the handle pipe **60.** More specifically, the right pipe-overlapping portion **72** overlaps at least a part of the inner curved portion **62a** and the linear portion **62b** of the upper-right stretch **62** of the handle pipe **60,** but does not overlap the outer curved portion **62c.** Similarly, the left pipe-overlapping portion **73** overlaps at least a part of the inner curved portion **63a** and the linear portion **63b** of the upper-left stretch **63** of the handle pipe **60,** but does not overlap the outer curved portion **63c.** In other words, the reinforcement member **70** does not overlap the outer curved portions **62c** and **63c** of the upper-right stretch **62** and the upper-left stretch **63** of the handle pipe **60.** Moreover, in the example shown, an edge of the right end **72a** of the right pipe-overlapping portion **72** and an edge of the left end **73a** of the left pipe-overlapping portion **73** make an acute angle with respect to the direction that the pipe center line **60a** extends. Specifically, an upper edge **72b** of the right end **72a** and a lower edge **72c** which is located below the upper edge **72b** make an acute angle. Similarly, an upper edge **73b** of the left end **73a** and a lower edge **73c** which is located below the upper edge **73b** make an acute angle.

In still other words, as viewed in the front-rear direction, an edge of the right end **72a** of the right pipe-overlapping portion **72** and an edge of the left end **73a** of the left pipe-overlapping portion **73** obliquely intersect the pipe center line **60a.** More specifically, the upper edge **72b** of the right end **72a** obliquely intersects the pipe center line 60a as viewed in the front-rear direction. Similarly, the upper edge **73b** of the left end **73a** obliquely intersects the pipe center line **60a** as viewed in the front-rear direction.

The post-overlapping portion **71** is located between the right pipe-overlapping portion **72** and the left pipe-overlapping portion **73,** and is connected to (i.e., continuous with) with the right pipe-overlapping portion **72** and the left pipe-overlapping portion **73.** The post-overlapping portion **71** overlaps an area from the central portion **61** of the handle pipe **60** to the handle post **50.**

In a cross section that is orthogonal to the pipe center line **60a,** each of the right pipe-overlapping portion **72** and the left pipe-overlapping portion **73** of the reinforcement member **70** includes, as shown in FIG. **8B****,** a protrusion **70a** which protrudes from the outer peripheral surface of the handle pipe **60** in a radial direction (i.e., whose height h is defined in a radial direction of the handle pipe **60).** The protrusions **70a** extend in the direction that the pipe center line **60a** extends. In the example shown, beginning from the boundary between the post-overlapping portion **71** and the right pipe-overlapping portion **72,** the protrusion **70a** of the right pipe-overlapping portion **72** extends part of the way into the right pipe-overlapping portion **72;** on the other hand, the protrusion **70a** of the left pipe-overlapping portion **73** extends, beginning from the boundary between the post-overlapping portion **71** and the left pipe-overlapping portion **73,** part of the way into the left pipe-overlapping portion **73.** In other words, each protrusion **70a** is not located at the edges (the upper edge **72b** and the lower edge **72c)** of the right end **72a** of the right pipe-overlapping portion **72** or at the edges (the upper edge **73b** and the lower edge **73c)** of the left end **73a** of the left pipe-overlapping portion **73.** In still other words, an outer end (terminating end) **70a1** regarding the right-left direction of each protrusion **70a** does not overlap the edges of the right end **72a** of the right pipe-overlapping portion **72** or the edges of the left end **73a** of the left pipe-overlapping portion **73.** In still other words, outer ends (terminating ends) **70a1** regarding the right-left direction of the protrusions **70a** are distant from the edges of the right end **72a** of the right pipe-overlapping portion **72** and from the edges of the left end **73a** of the left pipe-overlapping portion **73.** In the example shown, the outer end **70a1** of the protrusion **70a** of the right pipe-overlapping portion **72** overlaps the linear portion **62b** of the upper-right stretch **62** of the handle pipe **60,** whereas the outer end **70a1** of the protrusion **70a** of the left pipe-overlapping portion **73** overlaps the linear portion **63b** of the upper-left stretch **63** of the handle pipe **60.**

The handle assembly **40** according to the present embodiment has the reinforcement member **70,** which includes the post-overlapping portion **71** overlapping an area from the central portion of the handle pipe **60** to the handle post 50, thus allowing the reinforcement member **70** to couple to the handle post **50** at a position not significantly away from the central portion of the handle pipe **60** along the front-rear direction. As a result, compactness can be achieved while maintaining strength.

Furthermore, in the handle assembly **40** according to the present embodiment, the right pipe-overlapping portion **72** and the left pipe-overlapping portion **73** of the reinforcement member **70** each include a protrusion **70a** that protrudes, in a cross section that is orthogonal to the pipe center line 60a, from the outer peripheral surface of the handle pipe **60** in a radial direction. This allows the geometrical moment of inertia of the reinforcement member **70** to be increased for an improved rigidity. Moreover, since the protrusions **70a** of the reinforcement member **70** extend in the direction that the pipe center line **60a** extends, rigidity of the reinforcement member **70** can be improved across a wide span (i.e., in an overall manner). Therefore, the handle pipe **60** can be reduced in thickness.

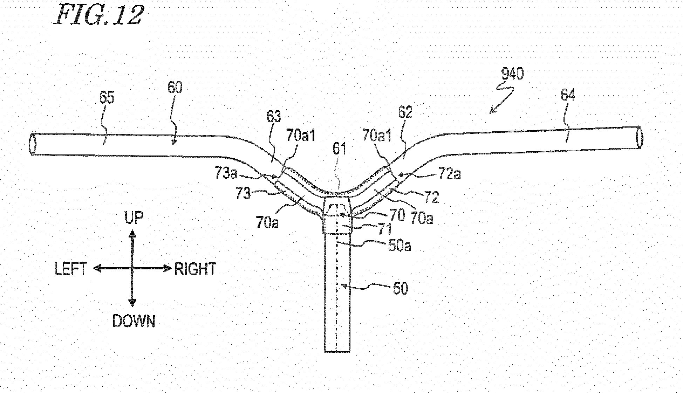

Furthermore, the protrusions **70a** of the reinforcement member **70** are not located at the edges (the upper edge **72b** and the lower edge **72c)** of the right end **72a** of the right pipe-overlapping portion **72** or the edges (the upper edge **73b** and the lower edge 73c) of the left end **73a** of the left pipe-overlapping portion **73.** In other words, the outer end **70a1** of each protrusion **70a** is in a position deviated from the edges (the upper edge **72b** and the lower edge **72c)** of the right end **72a** of the right pipe-overlapping portion **72** or the edges (the upper edge **73b** and the lower edge **73c)** of the left end **73a** of the left pipe-overlapping portion **73.** Advantages which are obtained from this aspect will be described through a comparison with a handle assembly **940** of Comparative Example **2** as shown in FIG. **12****.**

The handle assembly **940** of Comparative Example **2** shown in FIG. **12** differs from the handle assembly **940** according to the present embodiment in that the protrusions **70a** of the reinforcement member **70** are located at an edge of the right end **72a** of the right pipe-overlapping portion **72** and at an edge of the left end **73a** of the left pipe-overlapping portion **73** (i.e., the outer ends **70a1** of the protrusions **70a** are aligned with an edge of the right end **72a** of the right pipe-overlapping portion **72** and an edge of the left end **73a** of the left pipe-overlapping portion **73).**

The right end **72a** of the right pipe-overlapping portion **72** and the left end **73a** of the left pipe-overlapping portion **73** (which also define the right end and left end of the entire reinforcement member **70)** are places where drastic changes in rigidity of the handle assembly **940** occur, because of presence or absence of the reinforcement member **70,** where stress is likely to concentrate. As in the handle assembly **940** of Comparative Example 2, if each protrusion **70a** is located at the edge of an end (the right end or the left end) of the reinforcement member **70,** the welded portion at the end of the reinforcement member **70** will become a place where stress concentrates. That is, if the protrusions **70a** are located at the edges of the ends of the reinforcement member **70,** changes in rigidity of the handle assembly **940** will be even wider because of presence or absence of the reinforcement member **70.** More specifically, if each protrusion **70a** is formed at the edge of an end (the right end or the left end) of the reinforcement member **70,** stress will concentrate at the welded portion at the edge of the end (the right end or the left end) of the reinforcement member **70.** Therefore, if the outer end **70a1** of each protrusion **70a** is at the edge of an end of the reinforcement member **70,** two factors of stress concentration exist for the same cross section, thus causing significant stress. On the other hand, according to an embodiment, the outer end **70a1** of each protrusion **70a** is in a position deviated from the edges of the right end **72a** of the right pipe-overlapping portion **72** or the edges of the left end **73a** of the left pipe-overlapping portion **73,** whereby the aforementioned stress concentration can be avoided.

Moreover, in the handle assembly **940** of Comparative Example 2, the edge of the right end **72a** of the right pipe-overlapping portion **72** and the edge of the left end **73a** of the left pipe-overlapping portion **73** make a right angle with respect to the direction that the pipe center line 60a extends. On the other hand, in the handle assembly **40** according to the present embodiment, an edge (the upper edge **72b)** of the right end **72a** of the right pipe-overlapping portion **72** and an edge (the upper edge **73b)** of the left end **73a** of the left pipe-overlapping portion **73** make an acute angle (i.e., obliquely intersect) with respect to the direction that the pipe center line **60a** extends. Consequently, as compared to the case where they make a right angle (as in the handle assembly **940** of Comparative Example **2),** changes in rigidity of the handle assembly **40** at the right end **72a** and the left end **73b** of the reinforcement member **70** are smooth, whereby stress concentration can be alleviated. More specifically, changes in rigidity of the handle assembly **40** at the right end **72a** and the left end **73b** of the reinforcement member **70** will be smooth across the direction that the pipe center line **60a** extends, whereby stress concentration can be alleviated.

Although the present embodiment illustrates an exemplary construction where both of the right pipe-overlapping portion **72** and the left pipe-overlapping portion **73** have protrusions **70a,** it may be only one of the right pipe-overlapping portion **72** and the left pipe-overlapping portion **73** that has a protrusion **70a.** In other words, at least one of the right pipe-overlapping portion **72** and the left pipe-overlapping portion **73** may have a protrusion **70a.** From the standpoint of increasing the rigidity of the entire reinforcement member **70,** it is preferable for both of the right pipe-overlapping portion **72** and the left pipe-overlapping portion 73 have protrusions **70a** as in the illustrated example.

There is no particular limitation as to the protruding height h (see FIG. **8B****)** of each protrusion **70a** of the reinforcement member **70.** From the standpoint of increasing the geometrical moment of inertia to sufficiently increase rigidity of the reinforcement member **70,** the protruding height h of each protrusion **70a** is preferably equal to or greater than the thickness of the reinforcement member **70.**

From the standpoint of improving rigidity of the reinforcement member **70** across a wide span, each protrusion **70a** preferably extends somewhat long from an end (that lies closer to the post-overlapping portion **71)** of the right pipe-overlapping portion **72** or the left pipe-overlapping portion **73,** along the direction that the pipe center line **60a** extends; specifically, it is preferable that the outer end **70a1** of each protrusion **70a** regarding the right-left direction overlaps the linear portion **62b** of the upper-right stretch **62** of the handle pipe **60** or the linear portion **63b** of the upper-left stretch **63.**

Moreover, the reinforcement member **70** preferably does not overlap the outer curved portions **62c** and **63c** of the upper-right stretch **62** and the upper-left stretch **63** of the handle pipe **60.** The reason is that, if the right end **72a** or the left end **73a** of the reinforcement member **70** is located on the outer curved portions **62c** and **63c,** substantial stress may act on the outer curved portions **62c** and **63c,** which is not preferable.

As has already been described, the reinforcement member **70** is coupled to the handle post **50** and the handle pipe **60** via welding, for example. The periphery of the reinforcement member **70** may be entirely welded to the handle post **50** or the handle pipe **60;** alternatively, a portion thereof may not be welded to either the handle post **50** or the handle pipe **60.** Hereinafter, within the periphery of the reinforcement member **70,** a portion that is welded to the handle post **50** or the handle pipe **60** will be referred to as a "welded portion", and a portion that is welded to neither the handle post **50** nor the handle pipe **60** will be referred to as a "non-welded portion".

Preferably, the periphery of the reinforcement member **70** includes not only a welded portion(s), but also a non-welded portion(s), as is illustrated in FIGS. **2A** and **2B** and so on. In the case where the periphery of the reinforcement member **70** does not include any non-welded portions, i.e., the entire periphery of the reinforcement member **70** is a welded portion, thermal effects (strain or change in hardness) associated with the welding heat applied to the reinforcement member **70,** the handle post **50,** or the handle pipe **60** may be a problem. By allowing a non-welded portion to be included in the periphery while maintaining sufficient coupling strength of the reinforcement member **70,** thermal effects due to excess welding heat can be reduced.

Regarding the periphery of the reinforcement member **70,** in each of its region corresponding to the right end **72a** of the right pipe-overlapping portion **72** and its region corresponding to the left end **73a** of the left pipe-overlapping portion **73,** both the upper edge and the lower edge may be welded; only the upper edge may be welded; or only the lower edge may be welded. In other words, a welded portion may be located in at least a part of each of the edge of the right end **72a** of the right pipe-overlapping portion **72** and the edge of the left end 73a of the left pipe-overlapping portion **73.**

Moreover, the outer end **70a1** of the protrusion **70a** may also be considered as a place where rigidity of the handle assembly **40** changes. Therefore, from the standpoint of achieving firmer coupling, the periphery of the reinforcement member **70** preferably includes a welded portion that is formed astride the inside and the outside of the outer end **70a1** of the protrusion **70a,** as is illustrated in FIG. **4A****.**

Note that the shape of the right end **72a** and the left end **73a** of the reinforcement member **70** is not limited to what is illustrated in FIG. **2A** and so on. FIGS. **9A** and **9B** show other exemplary shapes for the right end **72a** and the left end **73a** of reinforcement member **70.**

The right end **72a** and the left end **73a** of the reinforcement member **70** as illustrated in FIG. **2A** and so on are shaped so that the upper edges **72b** and **73b** extend in a direction that intersects the pipe center line **60a,** and that the lower edges **72c** and **73c** extend substantially in parallel to the pipe center line **60a.** In other words, the right end **72a** and the left end **73a** of the reinforcement member **70** are shaped so that, when the right pipe-overlapping portion **72** and the left pipe-overlapping portion **73** are viewed in the front-rear direction, the right pipe-overlapping portion 72 and the left pipe-overlapping portion **73** each have a longer lower side than an upper side.

The right end **72a** and the left end **73a** of the reinforcement member **70** as shown in FIG. **9A** are shaped so that the upper edges **72b** and **73b** extend substantially in parallel to the pipe center line **60a,** and that the lower edges **72c** and **73c** extend in a direction that intersects the pipe center line 60a. In other words, the right end **72a** and the left end **73a** of the reinforcement member **70** are shaped so that, when the right pipe-overlapping portion **72** and the left pipe-overlapping portion **73** are viewed in the front-rear direction, the right pipe-overlapping portion **72** and the left pipe-overlapping portion **73** each have a longer upper side than a lower side.

The right end **72a** and the left end **73a** of the reinforcement member **70** as shown in FIG. **9B** are shaped so that the upper edges **72b** and **73b** extend in a direction that intersects the pipe center line **60a** and that the lower edges **72c** and 73c also extend in a direction that intersects the pipe center line **60a.**

In the reinforcement member **70** of either one of the shapes illustrated in FIGS. **9A** and **9B****,** an edge of the right end **72a** of the right pipe-overlapping portion **72** and an edge of the left end **73a** of the left pipe-overlapping portion **73** make an acute angle (i.e., obliquely intersect) with respect to the direction that the pipe center line 60a extends. Consequently, changes in rigidity of the handle assembly **40** at the right end **72a** and the left end **73b** of the reinforcement member **70** are smooth, whereby stress concentration can be alleviated.

According to an embodiment, there is provided a handle assembly for straddled vehicles which can be made compact while maintaining sufficient strength. A handle assembly according to an embodiment is suitably used for various straddled vehicles, such as scooter-type vehicles and moped-type vehicles.

## Claims

1. A handle assembly (40) for a estraddled vehicle (1), the handle assembly (40) comprising:
a handle post (50);
a handle pipe (60) coupled to one end of the handle post (50), the handle pipe (60) extending along a right-left direction which is orthogonal to an axial direction of the handle post (50); and
a reinforcement member (70) coupled to the handle post (50) and the handle pipe (60), wherein,
the handle pipe (60) includes
a central portion (61) coupled to the handle post (50),
an upper-right stretch (62) extending upward and rightward from the central portion (61),
an upper-left stretch (63) extending upward and leftward from the central portion (61),
a right-grip support (64) extending rightward from the upper-right stretch (62), a grip member being attached at a right end thereof, and
a left-grip support (65) extending leftward from the upper-left stretch (63), a grip member being attached at a left end thereof;
the upper-right stretch (62) and the upper-left stretch (63) of the handle pipe (60) each include: an inner curved portion (62a, 63a) which is continuous with the central portion (61) and is curved; a linear portion (62b, 63b) which linearly extends from the inner curved portion (62a, 63a); and an outer curved portion (62c, 63c) which extends from the linear portion (62b, 63b) and is curved;
the reinforcement member (70) is overlaid on the handle post (50) and the handle pipe (60) in a front-rear direction which is orthogonal to the axial direction and the right-left direction;
in a cross section orthogonal to a pipe center line (60a) of the handle pipe (60), at least a part of the reinforcement member (70) extends along a peripheral direction of the handle pipe (60); and
the reinforcement member (70) includes
a right pipe-overlapping portion (72) that overlaps the upper-right stretch (62) of the handle pipe (60),
a left pipe-overlapping portion (73) that overlaps the upper-left stretch (63) of the handle pipe (60), and
a post-overlapping portion (71) that is connected to the right pipe-overlapping portion (72) and the left pipe-overlapping portion (73) and overlaps an area from the central portion (61) of the handle pipe (60) to the handle post (50),
**characterized in that**
at least one of the right pipe-overlapping portion (72) and the left pipe-overlapping portion (73) of the reinforcement member (70) includes a protrusion (70a) that protrudes, in a cross section orthogonal to the pipe center line (60a), from an outer peripheral surface of the handle pipe (60) in a radial direction;
the protrusion or protrusions extend in a direction that the pipe center line (60a) of the handle pipe (60) extends, and is located neither at an edge of a right end (72a) of the right pipe-overlapping portion (72) nor at an edge of a left end (73a) of the left pipe-overlapping portion (73);
an outer end (70a1) of the protrusion or protrusions of the reinforcement member (70) regarding the right-left direction overlaps the linear portion (62b, 63b); and
the reinforcement member (70) overlaps neither the outer curved portion (62c) of the upper-right stretch (62) nor the outer curved portion (63c) of the upper-left stretch (63).

2. The handle assembly (40) of claim 1, wherein the edge of the right end (72a) of the right pipe-overlapping portion (72) and the edge of the left end (73a) of the left pipe-overlapping portion (73) make an acute angle with respect to the direction that the pipe center line (60a) extends.

3. The handle assembly (40) of claim 1, wherein the edge of the right end (72a) of the right pipe-overlapping portion (72) and the edge of the left end (73a) of the left pipe-overlapping portion (73) obliquely intersect the pipe center line (60a), as viewed in the front-rear direction.

4. The handle assembly (40) of claim 1 or 2, wherein the protrusion or protrusions of the reinforcement member (70) have a protruding height (h) which is equal to or greater than a thickness of the reinforcement member (70).

5. The handle assembly (40) of any of claims 1 to 4, wherein a periphery of the reinforcement member (70) includes a welded portion that is welded to the handle post (50) or the handle pipe (60) and a non-welded portion that is welded to neither the handle post (50) nor the handle pipe (60).

6. The handle assembly (40) of claim 5, wherein the welded portion is located in at least a part of each of the edge of the right end (72a) of the right pipe-overlapping portion (72) and the edge of the left end (73a) of the left pipe-overlapping portion (73).

7. A straddled vehicle (1) comprising the handle assembly (40) of any of claims 1 to 6.

## Patentansprüche

1. Griffanordnung (40) für ein Spreizsitz-Fahrzeug (1), wobei die Griffanordnung (40) umfasst:
eine Griffstange (50);
ein Griffrohr (60), das mit einem Ende der Griffstange (50) verbunden ist, wobei sich das Griffrohr (60) in einer Querrichtung erstreckt, die rechtwinklig zu einer axialen Richtung der Griffstange (50) ist; sowie
ein Verstärkungselement (70), das mit der Griffstange (50) und dem Griffrohr (60) verbunden ist, wobei,
das Griffrohr (60) einschließt:
einen mittleren Abschnitt (61), der mit der Griffstange (50) gekoppelt ist,
einen oberen rechten Teilabschnitt (62), der sich von dem mittleren Abschnitt (61) nach oben und nach rechts erstreckt,
einen oberen linken Teilabschnitt (63), der sich von dem mittleren Abschnitt (61) nach oben und nach links erstreckt,
einen rechten Griffträger (64), der sich von dem oberen rechten Teilabschnitt (62) nach rechts erstreckt, wobei an seinem rechten Ende ein Griffelement angebracht ist, und
einen linken Griffträger (65), der sich von dem oberen linken Teilabschnitt (63) nach links erstreckt, wobei an seinem linken Ende ein Griffelement angebracht ist;
wobei der obere rechte Teilabschnitt (62) und der obere linke Teilabschnitt (63) des Griffrohrs (60) jeweils einen inneren gekrümmten Abschnitt (62a, 63a), der sich an den mittleren Abschnitt (61) anschließt und gekrümmt ist, einen geradlinigen Abschnitt (62b, 63b), der sich geradlinig von dem inneren gekrümmten Abschnitt (62a, 63a) aus erstreckt; sowie einen äußeren gekrümmten Abschnitt (62c, 63c), der sich von dem geradlinigen Abschnitt (62b, 63b) aus erstreckt und gekrümmt ist;
das Verstärkungselement (70) auf die Griffstange (50) und das Griffrohr (60) in einer Längsrichtung aufgebracht ist, die senkrecht zu der axialen Richtung und der Querrichtung ist;
wenigstens ein Teil des Verstärkungselementes (70), in einem Querschnitt rechtwinklig zu einer Rohr-Mittellinie (60a) des Griffrohrs (60), sich in einer Umfangsrichtung des Griffrohrs (60) erstreckt; und
das Verstärkungselement (70) einschließt:
einen rechten das Rohr überlappenden Abschnitt (72), der den oberen rechten Teilabschnitt (62) des Griffrohrs (60) überlappt,
einen linken das Rohr überlappenden Abschnitt (73), der den oberen linken Teilabschnitt (63) des Griffrohrs (60) überlappt, sowie
einen die Stange überlappenden Abschnitt (71), der mit dem rechten das Rohr überlappenden Abschnitt (72) und dem linken das Rohr überlappenden Abschnitt (73) verbunden ist und einen Bereich von dem mittleren Abschnitt (61) des Griffrohrs (60) bis zu der Griffstange (50) überlappt,
**dadurch gekennzeichnet, dass**
der rechte das Rohr überlappende Abschnitt (72) oder/und der linke das Rohr überlappende Abschnitt (73) des Verstärkungselementes (70) einen Vorsprung (70a) enthält/enthalten, der in einem Querschnitt im rechten Winkel zu der Rohr-Mittellinie (60a) von einer Außenumfangsfläche des Griffrohrs (60) in einer radialen Richtung vorsteht;
der Vorsprung oder die Vorsprünge sich in einer Richtung erstreckt/erstrecken, in der die Rohr-Mittellinie (60a) des Griffrohrs (60) verläuft, und sich weder an einer Kante eines rechten Endes (72a) des rechten das Rohr überlappenden Abschnitts (72) noch an einer Kante eines linken Endes (73a) des linken das Rohr überlappenden Abschnitts (73) befindet/befinden;
ein äußeres Ende (70a1) des Vorsprungs oder der Vorsprünge des Verstärkungselementes (70) in der Querrichtung den geradlinigen Abschnitt (62b, 63b) überlappt; und
das Verstärkungselement (70) weder den äußeren gekrümmten Abschnitt (62c) des oberen rechten Teilabschnitts (62) noch den äußeren gekrümmten Abschnitt (63c) des oberen linken Teilabschnitts (63) überlappt.

2. Griffanordnung (40) nach Anspruch 1, wobei die Kante des rechten Endes (72a) des rechten das Rohr überlappenden Abschnitts (72) und die Kante des linken Endes (73a) des linken das Rohr überlappenden Abschnitts (73) einen spitzen Winkel in Bezug auf die Richtung bilden, in der die Rohr-Mittellinie (60a) verläuft.

3. Griffanordnung (40) nach Anspruch 1, wobei die Kante des rechten Endes (72a) des rechten das Rohr überlappenden Abschnitts (72) und die Kante des linken Endes (73a) des linken das Rohr überlappenden Abschnitts (73) die Rohr-Mittellinie (60a), in der Längsrichtung gesehen, schräg schneiden.

4. Griffanordnung (40) nach Anspruch 1 oder 2, wobei der Vorsprung oder die Vorsprünge des Verstärkungselementes (70) um eine Höhe (h) vorstehen, die genauso groß ist wie oder größer als eine Dicke des Verstärkungselementes (70).

5. Griffanordnung (40) nach einem der Ansprüche 1 bis 4, wobei ein Umfang des Verstärkungselementes (70) einen verschweißten Abschnitt, der an der Griffstange (50) oder dem Griffrohr (60) angeschweißt ist, und einen nicht verschweißten Abschnitt einschließt, der weder mit der Griffstange (50) noch mit dem Griffrohr (60) verschweißt ist.

6. Griffanordnung (40) nach Anspruch 5, wobei sich der verschweißte Abschnitt jeweils in wenigstens einem Teil der Kante des rechten Endes (72a) des rechten das Rohr überlappenden Abschnitts (72) und der Kante des linken Endes (73a) des linken das Rohr überlappenden Abschnitts (73) befindet.

7. Spreizsitz-Fahrzeug (1) das die Griffanordnung (40) nach einem der Ansprüche 1 bis 6 umfasst.

## Revendications

1. Ensemble guidon (40) pour un véhicule à enfourcher (1), l'ensemble guidon (40) comprenant :
un montant de guidon (50) ;
un tube de guidon (60) relié à une extrémité du montant de guidon (50), le tube de guidon (60) s'étendant le long d'une direction droite-gauche qui est orthogonale à une direction axiale du montant de guidon (50) ; et
un élément de renforcement (70) relié au montant de guidon (50) et au tube de guidon (60), dans lequel
le tube de guidon (60) comprend
une partie centrale (61) reliée au montant de guidon (50),
une portion supérieure droite (62) s'étendant vers le haut et vers la droite depuis la partie centrale (61),
une portion supérieure gauche (63) s'étendant vers le haut et vers la gauche depuis la partie centrale (61),
un support de poignée droite (64) s'étendant vers la droite depuis la portion supérieure droite (62), un élément formant poignée étant fixé à son extrémité droite, et
un support de poignée gauche (65) s'étendant vers la gauche depuis la portion supérieure gauche (63), un élément formant poignée étant fixé à son extrémité gauche ;
la portion supérieure droite (62) et la portion supérieure gauche (63) du tube de guidon (60) comprennent chacune : une partie courbe interne (62a, 63a) qui est continue avec la partie centrale (61) et est incurvée ; une partie linéaire (62b, 63b) qui s'étend de manière linéaire depuis la partie courbe interne (62a, 63a) ; et une partie courbe externe (62c, 63c) qui s'étend depuis la partie linéaire (62b, 63b) et est incurvée ;
l'élément de renfort (70) recouvre le montant de guidon (50) et le tube de guidon (60) dans une direction avant-arrière qui est orthogonale à la direction axiale et à la direction droite-gauche ;
en section transversale orthogonale à une ligne médiane de tube (60a) du tube de guidon (60), au moins une partie de l'élément de renforcement (70) s'étend le long d'une direction périphérique du tube de guidon (60) ; et
l'élément de renforcement (70) comprend
une partie de recouvrement de tube droite (72) qui recouvre la portion supérieure droite (62) du tube de guidon (60),
une partie de recouvrement de tube gauche (73) qui recouvre la portion supérieure gauche (63) du tube de guidon (60), et
une partie de recouvrement de montant (71) qui est reliée à la partie de recouvrement de tube droite (72) et à la partie de recouvrement de tube gauche (73) et recouvre une région allant de la partie centrale (61) du tube de guidon (60) au montant de guidon (50),
**caractérisé en ce que**
au moins la partie de recouvrement de tube droite (72) et/ou la partie de recouvrement de tube gauche (73) de l'élément de renforcement (70) comprend une saillie (70a) qui fait saillie, en section transversale orthogonale à la ligne médiane de tube (60a), depuis une surface périphérique extérieure du tube de guidon (60) dans une direction radiale ;
la saillie ou les saillies s'étendent dans une direction dans laquelle s'étend la ligne médiane de tube (60a) du tube de guidon (60) et n'est/ne sont située/s ni au niveau d'un bord d'une extrémité droite (72a) de la partie de recouvrement de tube droite (72), ni au niveau d'un bord d'une extrémité gauche (73a) de la partie de recouvrement de tube gauche (73) ;
une extrémité extérieure (70a1) de la saillie ou des saillies de l'élément de renforcement (70) par rapport à la direction droite-gauche chevauche la partie linéaire (62b, 63b) ; et
l'élément de renforcement (70) ne recouvre ni la partie courbe externe (62c) de la portion supérieure droite (62), ni la partie courbe externe (63c) de la portion supérieure gauche (63).

2. Ensemble guidon (40) selon la revendication 1, dans lequel le bord de l'extrémité droite (72a) de la partie de recouvrement de tube droite (72) et le bord de l'extrémité gauche (73a) de la partie de recouvrement de tube gauche (73) forment un angle aigu par rapport à la direction dans laquelle s'étend la ligne médiane de tube (60a).

3. Ensemble guidon (40) selon la revendication 1, dans lequel le bord de l'extrémité droite (72a) de la partie de recouvrement de tube droite (72) et le bord de l'extrémité gauche (73a) de la partie de recouvrement de tube gauche (73) coupent la ligne médiane de tube (60a) de manière oblique, en vue dans la direction avant-arrière.

4. Ensemble guidon (40) selon la revendication 1 ou 2, dans lequel la saillie ou les saillies de l'élément de renforcement (70) ont une hauteur de saillie (h) qui est supérieure ou égale à une épaisseur de l'élément de renforcement (70).

5. Ensemble guidon (40) selon l'une quelconque des revendications 1 à 4, dans lequel un contour de l'élément de renforcement (70) comprend une partie soudée qui est soudée au montant de guidon (50) ou au tube de guidon (60) et une partie non soudée qui n'est soudée ni au montant de guidon (50), ni au tube de guidon (60).

6. Ensemble guidon (40) selon la revendication 5, dans lequel la partie soudée est située dans au moins une partie du bord de l'extrémité droite (72a) de la partie de recouvrement de tube droite (72) et une partie du bord de l'extrémité gauche (73a) de la partie de recouvrement de tube gauche (73).

7. Véhicule à enfourcher (1) comprenant l'ensemble guidon (40) selon l'une quelconque des revendications 1 à 6.
